# EUROPÄISCHE PATENTSCHRIFT

(11) **EP 1 765 581 B1**
(45) Veröffentlichungstag und Bekanntmachung des Hinweises auf die Patenterteilung: **23.01.2008**
(21) Anmeldenummer: 05747453.8
(22) Anmeldetag: 24.05.2005
(51) Int. Cl.: B29D 30/32

(54) **VERFAHREN UND VORRICHTUNG ZUM POSITIONIEREN VON WULSTKERNEN**
METHOD AND DEVICE FOR POSITIONING BEAD WIRES
PROCEDE ET DISPOSITIF POUR POSITIONNER DES TRINGLES DE TALON

(30) Priorität: 06.07.2004 DE 102004032511
(43) Veröffentlichungstag der Anmeldung: 28.03.2007
(73) Patentinhaber: Continental Aktiengesellschaft, 30165 Hannover (DE)
(72) Erfinder: LINNE, Stefan, 30900 Wedemark (DE); PAWLIK, Karl-Heinz, 30455 Hannover (DE)
(74) Vertreter: Finger, Karsten
(86) Internationale Anmeldenummer: PCT/EP2005/052356
(87) Internationale Veröffentlichungsnummer: WO 2006/003057

(56) Entgegenhaltungen:
- EP-A- 0 433 920
- EP-A- 0 995 584
- DE-B- 1 180 515
- DE-C1- 4 223 584
- FR-A- 2 043 295

## Beschreibung

Die Erfindung betrifft ein Verfahren zum Positionieren von Wulstkernen beim Aufbau einer Reifenkarkasse eines Radialreifens auf der ersten Stufe einer Reifenaufbaumaschine, welche eine einen zylindrischen Außenumfang aufweisende, expandierbare Karkasstrommel, zwei Balgträger mit Bälgen sowie zwei in Achsrichtung der Karkasstrommel verfahrbare Kemsetzvorrichtungen aufweist, wobei die Kernsetzvorrichtungen die Kerne von einer der Seiten der Karkasstrommel aufnehmen und eine der Kemsetzvorrichtungen den von ihr aufgenommenen Kern zur anderen Seite der Karkasstrommel transportiert.

Die Erfindung betrifft ferner eine Vorrichtung zum Positionieren von Wulstkernen beim Aufbau einer Reifenkarkasse eines Radialreifens auf der ersten Stufe einer Reifenaufbaumaschine, welche eine einen zylindrischen Außenumfang aufweisende, expandierbare Karkasstrommel, zwei Balgträger mit aufblähbaren Bälgen sowie zwei in Achsrichtung der Karkasstrommel verfahrbare Kernsetzvorrichtungen zum Aufnehmen der Kerne von einer Seite der Karkasstrommel aufweist, wobei eine der Kernsetzvorrichtungen über die Karkasstrommel zu deren anderen Seite verfahrbar ist.

Es ist bekannt, Rohreifen mittels einstufigen oder zweistufigen Reifenaufbaumaschinen herzustellen. Bei einem zweistufigen Verfahren werden auf der ersten Stufe der Reifenaufbaumaschine auf eine einen zylindrischen Außenumfang aufweisenden, expandierbaren Karkasstrommel die Innenseele und die Karkasstrommel gefahren wird, um diesen Wulstkern in eine "Parkposition" auf der Karkasstrommel zu bringen. Nachdem der Kerndurchmesser größer ist als der Außendurchmesser der Trommel, wird der Kern vorerst auf über den Umfang der Karkasstrommel angeordnete Halteteile gesetzt und die Kemsetzvorrichtung weggefahren. Zum Setzen dieses Kernes erfasst die Kernsetzvorrichtung den Kern wieder und bewegt ihn auf die mittlerweile aufgebaute Reifenkarkasse. Nachdem diese Kernsetzvorrichtung entfernt wird, kann sie wieder in ihre Ausgangslage auf der anderen Seite der Karkasstrommel gebracht werden. Dazu ist vorgesehen, dass die Kernsetzvorrichtung aus Segmenten aufgebaut wird, die sich zangenförmig öffnen können, um die Vorrichtung von der Karkasstrommel abheben zu können.

Weitere Verfahren und Vorrichtungen zum Setzen von Wulstkerner auf Reifenaufbautrommeln sind aus dem Dokumenten EP 0 433 920 A und FR 2 043 295 bekannt.

Der Erfindung liegt die Aufgabe zu Grunde, bei der ersten Stufe einer Reifenaufbaumaschine, welche eine von beiden Seiten zugängliche Karkasstrommel aufweist und welche insbesondere nach dem Finger-Ply-Down-Verfahren oder dem Expansionstrommelverfahren arbeitet, ein automatisches, die Zykluszeit deutlich verkürzendes Setzen der Wulstkerne zu ermöglichen.

Was das Verfahren betrifft wird diese Aufgabe erfindungsgemäß dadurch gelöst, dass die Kerne auf der einen Seite der Karkasstrommel auf nebeneinander angeordneten, in ihrem Durchmesser veränderbaren, ringförmigen Kernzentriereinrichtungen positioniert werden, durch eine Vergrößerung des Durchmessers derselben zentriert gehalten werden, der der Karkasstrommel näher liegende Wulstkern von der einen Kernsetzvorrichtung erfasst, mit dieser auf die andere Seite der eingefahrenen Karkasstrommel transportiert wird und während des Aufbaues der Reifenkarkasse in einer Warteposition verbleibt, die zweite Kernsetzvorrichtung den zweiten Kern von der anderen Kernzentriereinrichtung aufnimmt und schließlich beide Kerne mittels der Kernsetzvorrichtungen auf die Reifenkarkasse gesetzt werden.

Was die Vorrichtung betrifft wird die gestellte Aufgabe erfindungsgemäß dadurch gelöst, dass auf einer der Seiten der Karkasstrommel zwei ringförmige, in ihrem Durchmesser veränderbare und in Achsrichtung der Karkasstrommel bewegbare Kernzentriereinrichtungen vorgesehen sind. anschließend die Karkasseinlage aufgelegt und gespleißt. Bei expandierter Trommel werden die Wulstkeme mitsamt Kernprofilen gesetzt. Es folgt der Umschlag der die Karkasstrommel überragenden Überstände der Karkasseinlage um die Wulstkerne und die Kernprofile, was mit Hilfe von aufblähbaren Bälgen durchgeführt wird. Nach dem Auflegen von gegebenenfalls weiteren Reifenbauteilen und dem Auflegen und Anrollen von Seitenwandprofilen ist die Reifenkarkasse fertiggestellt und wird von der nun eingefahrenen Karkasstrommel entfernt. Über eine Transfereinrichtung wird die Reifenkarkasse zu einer zweiten Aufbautrommel transportiert. Auf einer gesonderten Gürteltrommel werden die Gürtellagen zum Gürtelverband komplettiert und anschließend der ein- oder mehrteilige Laufstreifen aufgebracht. Eine Transfereinrichtung transportiert den Gürtel-Laufstreifen-Verband zur Reifenkarkasse und positioniert diesen über der Karkasse. Durch Bombieren der Reifenkarkasse wird diese mit dem Gürtel-Laufstreifen-Verband zusammengefügt und durch Anrollen verbunden. Bei einem Einstufenverfahren erfolgt die Herstellung der Karkasse und die Fertigstellung des Rohreifens durch Komplettieren mit dem Gürtel-Laufstreifen-Verband auf einer einzigen Trommel.

Bei zweistufigen Reifenaufbaumaschinen, die gemäß einem Expansionstrommelverfahren arbeiten, werden beispielsweise die Kerne von einer Seite der Karkasstrommel gesetzt, indem der eine Kern mit Luftdüsen von links nach rechts oder vica versa über die Karkasstrommel hinübergeblasen wird. Diese Maßnahme ist unangenehm laut und funktioniert bei Kernen mit kleinen Kernprofilen nur ungenügend. Bei Reifenaufbaumaschinen, die gemäß dem Finger-Ply-Down-Verfahren arbeiten, gibt es zur Zeit keine Vorrichtung, die das Setzen der Wulstkerne erleichtern oder beschleunigen würde. Die Wulstkeme werden von Hand aus in die Reifenaufbaumaschine links und rechts eingelegt. Die Zykluszeit der Reifenaufbaumaschine ist daher relativ lang.

Aus der EP-A2-1 295 708 sind ein Verfahren und eine Vorrichtung zum Setzen von Wulstkernen auf eine Reifenkarkasse bekannt, bei der eine Reifenaufbaumaschine mit einer Karkasstrommel verwendet wird, welche auf der einen Seite eingespannt ist, sodass beide Wulstkerne vom freien Ende der Trommel gesetzt werden müssen. Die beiden Wulstkerne werden seitlich des freien Bereiches der Karkasstrommel von je einer Kernsetzvorrichtung erfasst, wobei die eine Kernsetzvorrichtung über Gemäß der Erfindung werden daher die Verfahrensschritte des Positionierens und Zentrierens der Kerne sowie ihr Aufnehmen von Kernsetzvorrichtungen seitlich der Karkasstrommel und somit von der Karkasstrommel entkoppelt und weitgehend automatisch durchgeführt. Der sonstige Aufbau der Reifenkarkasse kann daher parallel dazu erfolgen, wodurch die Maschinenzykluszeit verkürzt und der Automatisierungsgrad der Reifenaufbaumaschine erhöht werden.

Die Maschinenzykluszeiten werden dadurch deutlich reduziert, dass das Positionieren und Zentrieren der Kerne während des Fertigstellens einer bereits mit anderen Kernen versehenen Reifenkarkasse auf der Karkasstrommel erfolgt.

Besonders rationell gestaltet sich das Herstellverfahren dann, wenn das Positionieren und das Zentrieren der Kerne während des Auflegens und Anrollens von Seitenwandprofilen durchgeführt wird.

Für einen besonders rationellen Verfahrensablauf ist es auch von Vorteil, wenn die der Karkasstrommel näher liegende Kernsetzvorrichtung mitsamt dem Kern unmittelbar nach dem Einfahren der Karkasstrommel und dem Abtransport einer fertig gestellten Reifenkarkasse über die Karkasstrommel gefahren wird. Hier kann diese Kemsetzvorrichtung mitsamt Kern in eine Warteposition verbleiben, bis die Reifenkarkasse soweit aufgebaut ist, dass die Kerne gesetzt werden können.

Die Welle, auf der die Bestandteile der Reifenaufbaumaschine gelagert sind, wird bevorzugt zweigeteilt ausgeführt, sodass es möglich ist, die Kernzentriervorrichtungen mitsamt dem diesen benachbarten Balgträger und der auf dieser Seite der Reifentrommel verbleibenden Kernsetzvorrichtung gemeinsam von der Karkasstrommel wegzubewegen. Dadurch entsteht zwischen der Karkasstrommel und dem Balgträger ein Zwischenraum, welcher es gestattet, die Kerne auf die Kernzentriervorrichtungen zu bringen und die fertig hergestellte Reifenkarkasse von der Karkasstrommel zu entfernen.

Wie bereits erwähnt zeichnet sich das erfindungsgemäße Verfahren dadurch aus, dass Verfahrensschritte, die ansonsten nacheinander durchgeführt werden, gleichzeitig erfolgen können. Dazu gehört auch, dass während des Auflegens der Innenseele und der Karkasseinlage die an der einen Seite der Karkasstrommel verbleibende Kernsetzvorichtung den zweiten Kern aufnimmt.

Weitere Merkmale, Vorteile und Einzelheiten der Erfindung werden nun anhand der schematischen Zeichnung, die Ausführungsbeispiele darstellt, näher beschrieben. Dabei zeigen
Fig. 1 einen Teilschnitt durch einen Radialreifen und
Fig. 2a bis 2d anhand prinzipieller Darstellungen den grundsätzlichen Aufbau und die grundsätzliche Funktionsweise einer erfindungsgemäßen Vorrichtung.

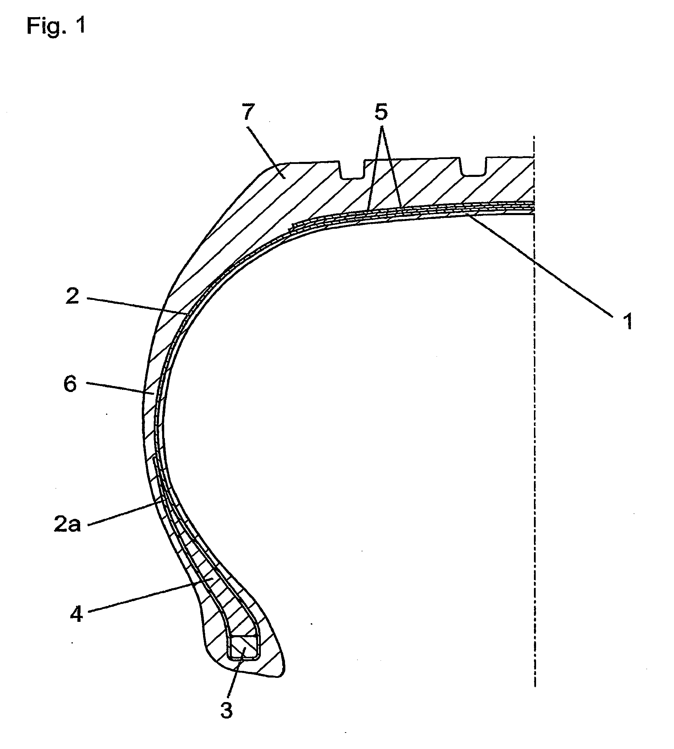

In dem in Fig. 1 beispielhaft gezeigten Teilquerschnitt durch einen Radialreifen für Personenkraftwagen sind lediglich die Hauptbestandteile des Reifens dargestellt und bezeichnet. Zu diesen gehören eine luftdichte Innenseele 1, eine Karkasseinlage 2, Wulstbereiche mit Wulstkernen 3 und Kernprofilen 4, ein Gürtel bestehend aus zwei Gürtellagen 5, Seitenwände 6 und ein Laufstreifen 7. Die Karkasseinlage 2 eines PKW Reifens weist üblicher Weise in eine Gummimischung eingebettete, insbesondere textile Festigkeitsträger auf, die von Wulstbereich zu Wulstbereich verlaufen und deren Endabschnitte von innen nach außen um die Wulstkerne 3 gelegt sind und in den Seitenwänden als Hochschläge 2a enden. Die Karkasseinlage 2 kann auch zweilagig ausgeführt sein. Die Wulstkerne 3 bestehen aus einer Vielzahl von Stahlseilen, die auf den Wulstkernen 3 sitzenden Kernprofile 4 bestehen üblicher Weise aus einer relativ harten Gummimischung. Bei der Herstellung des Reifens aus seinen einzelnen Bestandteilen werden die Wulstkerne 3 gemeinsam mit den noch unvulkanisierten Kernprofilen 4 als Einheiten vorgefertigt. Diese können zusätzlich mit einer oder mehreren Lagen einer äußeren Umhüllung aus einem gummierten Gewebe, sogenannten Wulstschutzstreifen, versehen sein.

Die Herstellung des Reifens erfolgt nach einem zweistufigen Verfahren bzw. mittels einer zwei Stufen aufweisenden Reifenaufbaumaschine. Auf der ersten Stufe der Reifenaufbaumaschine wird insbesondere nach dem sogenannten Finger-Ply-Down-Verfahren oder einem Expansionstrommelverfahren vorgegangen und es wird eine Reifenkarkasse hergestellt bzw. aufgebaut, die zumindest aus der Innenseele 1, der Karkasseinlage 2, den Kernen 3, den Kernprofilen 4 und den Seitenwänden 6 besteht. Auf der zweiten Stufe der Reifenaufbaumaschine werden die zum Gürtel und die zum Laufstreifen gehörenden Reifenbestandteile ergänzt. Gegenstand der Erfindung ist, wie bereits erwähnt, die erste Stufe der Reifenaufbaumaschine, deren wesentliche Bestandteile in den Zeichnungsfiguren 2a bis 2d schematisch dargestellt sind.

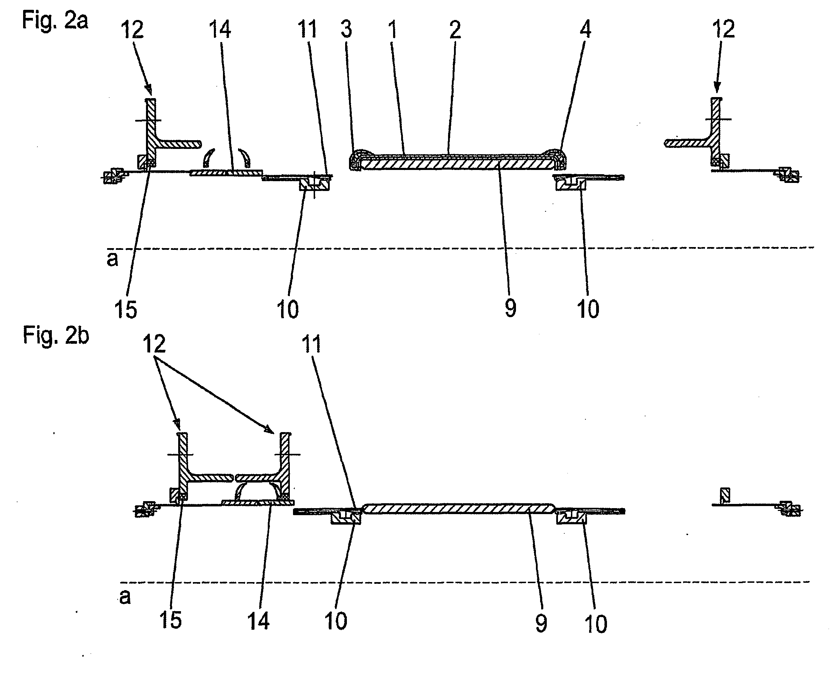

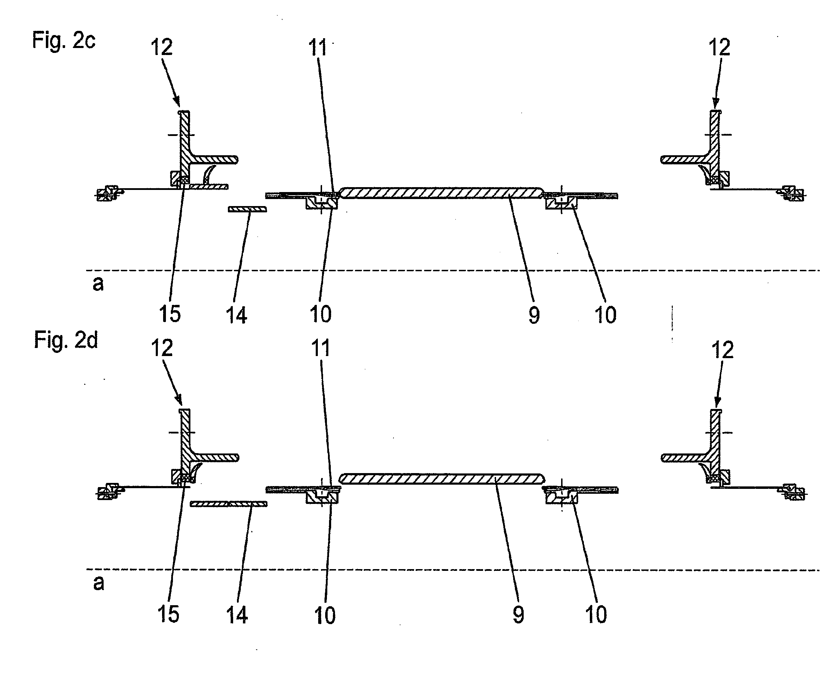

In den Zeichnungsfiguren 2a bis 2d verdeutlicht die strichlierte Linie a die zentrale Längsachse der Reifenaufbaumaschine, wobei bei einer vollständigen Darstellung die gezeigten Bauteile spiegelbildlich zur Linie a gekennzeichnet sein worden. Die dargestellten Bestandteile der Reifenaufbaumaschine und auch der Reifenbestandteile sind zumindest im Wesentlichen rotationssymmetrisch zur Achse a ausgeführt bzw. angeordnet. Die Reifenaufbaumaschine weist eine einen zylindrischen Außenumfang aufweisende, expandierbare Karkasstrommel 9 und zwei Balgträger 10 für aufblähbare Bälge 11 auf. Die dargestellte erste Stufe der Reifenaufbaumaschine weist ferner zwei Kemsetzvorrichtungen 12 auf, welche über ihren Umfang in bekannter Weise mit einer Anzahl von Magneten 15 versehen sind. Die beiden im Wesentlichen rotationssymmetrisch zur Längsachse a ausgeführten Kemsetzvorrichtungen 12 sind in Achsrichtung verfahrbar bzw. bewegbar angeordnet. Als weitere Bestandteile weist die Reifenaufbaumaschine zwei Kemzentriereinrichtungen 14 auf, welche über ihren Umfang auf nicht gezeigte Weise in Segmente geteilte Ringe sind, derart, dass ihr Durchmesser durch Ein- oder Ausfahren der Segmente konzentrisch verkleinert oder vergrößert werden kann. Die Kemzentriereinrichtungen 14 und der diesen benachbarte Balgträger 10 sind ferner in axialer Richtung, parallel zur Achse a, verfahrbar bzw. bewegbar. Entlang der Achse a ist eine Welle für die dargestellten Bauteile angeordnet, die in den Figuren links neben der Karkasstrommel 9 geteilt ist, sodass der linke Balgträger 10, die beiden Kernzentriereinrichtungen 14 und die linke Kemsetzvorrichtung 12 gemeinsam von der Karkasstrommel 9 wegbewegt werden können. Dadurch entsteht ein freier Raum zur Karkasstrommel 9, wie in Fig. 2 gezeigt In dieser Lage kann eine fertig gestellte Reifenkarkasse von der Karkasstrommel 9 entfernt werden und es können die Kerne 3 mit den Kernprofilen 4 auf die Kernzentriereinrichtungen 14 gebracht werden.

Vorerst wird die in Fig. 2a dargestellte gegenseitige Lage und Position der einzelnen Bestandteile der Reifenaufbaumaschine, verbunden mit einem bestimmten Verfahrensschritt bei der Herstellung einer PKW-Reifenkarkasse, beschrieben. Auf der expandierten Karkasstrommel 9 befindet sich eine fast fertiggestellte Reifenkarkasse, welche zumindest aus der Innenseele 1, der Karkasseinlage 2 und den Kernen 3 mit Kernprofilen 4 besteht. Die eine Kernsetzvorrichtung 12 befindet sich rechts neben der Karkasstrommel 9, die zweite links von der Karkasstrommel 9 befindliche ist gemeinsam mit den Kemzentriereinrichtungen 14 und dem linken Balgträger 11 von der Karkasstrommel 9 wegbewegt worden. Der Balgträger 10 rechts von der Karkasstrommel 9 befindet sich in seiner normalen Position. Die beiden Kemzentriereinrichtungen 14 sind nebeneinander zwischen dem linken Balgträger 10 und der links befindlichen Kernsetzvorrichtung 12 positioniert und befinden sich in ihrer eingefahrenen Lage. Durch den zwischen der Karkasstrommel 9 und dem linken Balgträger 10 befindlichen breiten Spalt sind die beiden ringförmigen Kerne 3 mit den Kernprofilen 4 als Einheiten von Hand aus eingeführt und auf die Kernzentriereinrichtungen 14 gesetzt worden. Während des Positionierens der Kerne 3 und dem nachfolgenden Zentrieren durch Expandieren der Kemzentriereinrichtungen 14 werden auf die Reifenkarkasse die hier nicht gezeigten Seitenwandprofile aufgelegt und mittels nicht gezeigter Einrichtungen eingerollt. Nun wird die fertiggestellte Reifenkarkasse von der vorher eingefahrenen Karkasstrommel 9 entfernt. Die beiden Kemsetzvorrichtungen 12 werden gemeinsam mit den beiden expandierten Kemzentriereinrichtungen 14 und dem links befindlichen Balgträger 10 nach rechts gefahren, bis dieser Balgträger 10 seine normale Position an der Karkasstrommel 9 eingenommen hat Fig. 2b zeigt diese Lage der Bestandteile der Reifenaufbaumaschine, wobei hier die rechte Kemsetzvorrichtung 12 bereits den Kern 3 aus der rechten der beiden Kemzentriereinrichtungen 14 magnetisch erfasst hat. Nun werden die Segmente der rechten Kernzentriereinrichtung 14 eingefahren und die rechte Kernsetzvorrichtung 12 wird mitsamt dem Wulstkern 3 über die nach wie vor eingefahrene Karkasstrommel 9 und die beiden Balgträger 10 nach rechts in eine Warteposition gefahren. Gleichzeitig ist die linke Kernsetzvorrichtung 12 in eine Warteposition gegenüber der linken Kernzentriereinrichtung 14 gebracht worden, sodass durch ein geringfügiges axiales Bewegen der Kernsetzvorrichtung 12 der linke Wulstkern 3 von den Magneten 15 der Vorrichtung 12 erfasst werden könnte. Diese Lage der einzelnen Bauteile der Reifenaufbaumaschine ist in Fig. 2c gezeigt.

Nun kann die nächste Reifenkarkasse aufgebaut werden, indem zuerst auf die mittlerweile wieder expandierte Karkasstrommel 9 die Innenseele 1 und die Karkasseinlage 2 aufgelegt und gespleißt werden. Während des Auflegens der Innenseele 1 und der Karkasseinlage 2 nimmt die linke Kemsetzvorrichtung 12 den linken Kern 3 von der Kernzentriervorrichtung 14. Nun sind beide Kerne 3 in den Kernsetzvorrichtungen 12 positioniert. Fig. 2d zeigt diese Lage während des Reifenaufbaus. Nun können die Kerne 3 mittels der Kernsetzvorrichtungen 14 automatisch gesetzt werden und die Reifenkarkasse weiter aufgebaut werden, indem auf bekannte Weise mittels der aufblähenden Bälge 11 die Karkassumschläge gebildet werden.

Die erfindungsgemäße Vorrichtung und das erfindungsgemäße Verfahren zeichnen sich durch einen sehr hohen Automatisierungsgrad aus. Von besonderem Vorteil ist auch die sehr kurze Zykluszeit, da einzelne Verfahrensschritte gleichzeitig ablaufen können. Es ist ferner nicht erforderlich, eine Karkasstrommel zu verwenden, die im eingefallenen, nicht expandierten Zustand eine geschlossene zylindrische Trommeloberfläche aufweist.

## Patentansprüche

1. Verfahren zum Positionieren von Wulstkernen (3) beim Aufbau einer Reifenkarkasse (2) eines Radialreifens auf der ersten Stufe einer Reifenaufbaumaschine, welche eine einen zylindrischen Außenumfang aufweisende, expandierbare Karkasstrommel (9), zwei Balgträger (10) mit Bälgen (11) sowie zwei in Achsrichtung der Karkasstrommel (9) verfahrbare Kernsetzvorrichtungen (12) aufweist, wobei die Kernsetzvorrichtungen (12) die Kerne (3) von einer der Seiten der Karkasstrommel (9) aufnehmen und eine der Kernsetzvorrichtungen (12) den von ihr aufgenommenen Kern (3) zur anderen Seite der Karkasstrommel (9) transportiert,
**dadurch gekennzeichnet,**
**dass** die Kerne (3) an der einen Seite der Karkasstrommel (9) auf nebeneinander angeordneten, in ihrem Durchmesser veränderbaren, ringförmigen Kemzentriereinrichtungen (14) positioniert werden, durch eine Vergrößerung des Durchmessers derselben zentriert gehalten werden, der der Karkasstrommel (9) näher liegende Wulstkern (3) von der einen Kernsetzvorrichtung (9) erfasst, mit dieser auf die andere Seite der eingefahrenen Karkasstrommel (9) transportiert wird und während des Aufbaus der Reifenkarkasse in einer Warteposition verbleibt, die zweite Kernsetzvorrichtung (12) den zweiten Kern (3) von der anderen Kernzentriereinrichtung (14) aufnimmt und schließlich beide Kerne (3) mittels der Kernsetzvorrichtungen (12) auf die Reifenkarkasse gesetzt werden.

2. Verfahren nach Anspruch 1, **dadurch gekennzeichnet, dass** das Positionieren und Zentrieren der Kerne (3) während des Fertigstellens einer bereits mit anderen Kernen (3) versehenen Reifenkarkasse auf der Karkasstrommel (9) erfolgt.

3. Verfahren nach Anspruch 2, **dadurch gekennzeichnet, dass** das Positionieren und Zentrieren der Kerne (3) während des Auflegens und Anrollens von Seitenwandprofilen erfolgt.

4. Verfahren nach einem der Ansprüche 1 bis 3, **dadurch gekennzeichnet, dass** die der Karkasstrommel (9) näher liegende Kernsetzvorrichtung (12) mitsamt dem Kem (3) unmittelbar nach dem Einfahren der Karkasstrommel (9) und dem Abtransport einer fertig gestellten Reifenkarkasse über die Karkasstrommel (9) gefahren wird.

5. Verfahren nach einem der Ansprüche 1 bis 4, **dadurch gekennzeichnet, dass** zum Setzen der Kerne (3) auf die Kernzentriervorrichtungen (14) und zum Entfernen einer fertig gestellten Reifenkarkasse die eine Kernsetzvorrichtung (12) mitsamt den Kernzentriervorrichtungen (14) und dem diesen benachbarten Balgträger (10) von der Karkasstrommel (9) wegbewegt werden.

6. Verfahren nach einem der Ansprüche 1 bis 5, **dadurch gekennzeichnet, dass** während des Auflegens der Innenseele (1) und der Karkasseinlage (2) die an der einen Seite der Karkasstrommel (9) verbleibende Kernsetzvorrichtung (12) den zweiten Kern (3) aufnimmt.

7. Vorrichtung zum Positionieren von Wulstkemen (3) beim Aufbau einer Reifenkarkasse (2) eines Radialreifens auf der ersten Stufe einer Reifenaufbaumaschine, welche eine einen zylindrischen Außenumfang aufweisende, expandierbare Karkasstrommel (9), zwei Balgträger (10) mit aufblähbaren Bälgen (11) sowie zwei in Achsrichtung der Karkasstrommel (9) verfahrbare Kernsetzvorrichtungen (12) zum Aufnehmen der Kerne (3) von einer Seite der Karkasstromme (9) aufweist, wobei eine der Kernsetzvorrichtungen (72) über die Karkasstrommel (9) zu deren anderen Seite verfahrbar ist,
**dadurch gekennzeichnet**
**dass** auf einer der Seiten der Karkasstrommel (9) zwei ringförmige, in ihrem Durchmesser veränderbare und in Achsrichtung der Karkasstrommel (9) bewegbare Kemzentriereinrichtungen (14) vorgesehen sind.

8. Vorrichtung nach Anspruch 7, **dadurch gekennzeichnet, dass** die Kernzentriereinrichtungen (14) außerhalb des einen Balgträgers (10) angeordnet sind, wobei zum Positionieren der ringförmig vorgefertigten Kerne (3) und zum Entfernen einer fertig gestellten Reifenkarkasse von der Karkasstrommel (9) zumindest dieser Balgträger (10) und die Kernzentriervorrichtungen (14) parallel zur Achse (a) von der Karkasstrommel (9) wegbewegbar sind.

## Claims

1. Method for positioning bead cores (3) during the construction of a tyre carcass (2) of a radial tyre on the first stage of a tyre building machine, which comprises an expandable carcass drum (9), having a cylindrical outer circumference, two bladder supports (10) with bladders (11) and also two core setting devices (12), which are movable in the axial direction of the carcass drum (9), the core setting devices (12) picking up the cores (3) from one of the sides of the carcass drum (9) and one of the core setting devices (12) transporting the core (3) picked up by it to the other side of the carcass drum (9), **characterized in that** the cores (3) are positioned on one side of the carcass drum (9) on adjacently arranged, variable-diameter, annular core centring devices (14), are kept centred by increasing the diameter of the same, the bead core (3) that is closer to the carcass drum (9) is taken up by the one core setting device (12), is transported by the latter to the other side of the moved-in carcass drum (9) and remains in a waiting position during the construction of the tyre carcass, the second core setting device (12) picks up the second core (3) from the other core centring device (14) and, finally, both cores (3) are set on the tyre carcass by means of the core setting devices (12).

2. Method according to Claim 1, **characterized in that** the positioning and centring of the cores (3) is performed during the completion of a tyre carcass provided with other cores (3) on the carcass drum (9).

3. Method according to Claim 2, **characterized in that** the positioning and centring of the cores (3) is performed during the placing and rolling on of sidewall profiles.

4. Method according to one of Claims 1 to 3, **characterized in that** the core setting device (12) that is closer to the carcass drum (9) is moved together with the core (3) over the carcass drum (9) directly after the carcass drum (9) has been moved in and a completed tyre carcass has been transported away.

5. Method according to one of Claims 1 to 4, **characterized in that**, for setting the cores (3) on the core centring devices (14) and for removing a completed tyre carcass, one core setting device (12) is moved together with the core centring devices (14) and the bladder support (10) adjacent to the latter away from the carcass drum (9).

6. Method according to one of Claims 1 to 5, **characterized in that**, during the placing of the inner core (1) and the carcass insert (2), the core setting device (12) remaining on one side of the carcass drum (9) picks up the second core (3).

7. Device for positioning bead wires (3) during the construction of a tyre carcass (2) of a radial tyre on the first stage of a tyre building machine, which comprises an expandable carcass drum (9), having a cylindrical outer circumference, two bladder supports (10) with inflatable bladders (11) and also two core setting devices (12), which are movable in the axial direction of the carcass drum (9), for picking up the cores (3) from one side of the carcass drum (9), one of the core setting devices (12) being movable over the carcass drum (9) to the other side thereof, **characterized in that** on one of the sides of the carcass drum (9) two annular, variable-diameter core centring devices (14), which can be moved in the axial direction of the carcass drum (9), are provided.

8. Device according to Claim 7, **characterized in that** the core centring devices (14) are arranged outside the one bladder support (10), at least this bladder support (10) and the core centring devices (14) being movable away from the carcass drum (9) parallel to the axis (a) for positioning the annularly prefabricated cores (3) and for removing a completed tyre carcass from the carcass drum (9).

## Revendications

1. Procédé pour positionner des tringles de talon (3) lors de la construction d'une carcasse de pneu (2) d'un pneu radial sur la première étape d'une machine de fabrication de pneus, qui comprend un tambour de carcasse expansible (9), présentant une périphérie extérieure cylindrique, deux supports annelés (10) avec des soufflets (11) ainsi que deux dispositifs de pose de tringle (12) déplaçables en direction axiale du tambour de carcasse (9), dans lequel les dispositifs de pose de tringle (12) contiennent les tringles (3) de l'un des côtés du tambour de carcasse (9) et un des dispositifs de pose de tringle (12) transporte la tringle qu'il contient (3) vers l'autre côté du tambour de carcasse (9), **caractérisé en ce que** les tringles (3) sont positionnées sur le premier côté du tambour de carcasse (9) sur des dispositifs de centrage de tringle (14) annulaires, de diamètre variable, disposés l'un à côté de l'autre, sont maintenues en position centrée par une augmentation de leur diamètre, la tringle de talon (3) la plus proche du tambour de carcasse (9) est saisie par le premier dispositif de pose de tringle (12), est transportée avec celui-ci sur l'autre côté du tambour de carcasse introduit (9) et reste dans une position d'attente pendant la construction de la carcasse de pneu, le deuxième dispositif de pose de tringle (12) reprend la deuxième tringle (3) de l'autre dispositif de centrage de tringle (14) et finalement les deux tringles (3) sont posées sur la carcasse de pneu au moyen des dispositifs de pose de tringle (12).

2. Procédé selon la revendication 1, **caractérisé en ce que** le positionnement et le centrage des tringles (3) sur le tambour de carcasse (9) sont effectués pendant l'achèvement d'une carcasse de pneu déjà pourvue d'autres tringles (3).

3. Procédé selon la revendication 2, **caractérisé en ce que** le positionnement et le centrage des tringles (3) sont effectués pendant le placement et l'enroulement de profilés de flancs.

4. Procédé selon l'une quelconque des revendications 1 à 3, **caractérisé en ce que** le dispositif de pose de tringles (12) le plus proche du tambour de carcasse (9) est déplacé avec la tringle (3) au-dessus du tambour de carcasse (9) immédiatement après l'introduction du tambour de carcasse (9) et l'évacuation d'une carcasse de pneu terminée.

5. Procédé selon l'une quelconque des revendications 1 à 4, **caractérisé en ce que**, pour la pose des tringles (3) sur les dispositifs de centrage de tringle (14) et pour l'enlèvement d'une carcasse de pneu terminée, le premier dispositif de pose de tringle (12), avec les dispositifs de centrage de tringle (14) et le support annelé (10) proche de ceux-ci, est écarté du tambour de carcasse (9).

6. Procédé selon l'une quelconque des revendications 1 à 5, **caractérisé en ce que**, pendant le placement de l'âme intérieure (1) et de la doublure de carcasse (2), le dispositif de pose de tringle (12) restant sur le premier côté du tambour de carcasse (9) contient la deuxième tringle (3).

7. Dispositif pour positionner des tringles de talon (3) lors de la construction d'une carcasse de pneu (2) d'un pneu radial sur la première étape d'une machine de construction de pneu, qui comprend un tambour de carcasse expansible (9), présentant une périphérie extérieure cylindrique, deux supports annelés (10) avec des soufflets gonflables (11) ainsi que deux dispositifs de pose de tringle (12) déplaçables en direction axiale du tambour de carcasse (9) pour reprendre les tringles (3) d'un côté du tambour de carcasse (9), dans lequel un des dispositifs de pose de tringle (12) est déplaçable au-dessus du tambour de carcasse (9) vers l'autre côté de celui-ci, **caractérisé en ce qu'**il est prévu, sur un des côtés du tambour de carcasse (9), deux dispositifs de centrage de tringle (14) de diamètre variable et mobiles en direction axiale du tambour de carcasse (9).

8. Dispositif selon la revendication 7, **caractérisé en ce que** les dispositifs de centrage de tringle (14) sont disposés à l'extérieur du premier soufflet annelé (10), dans lequel, pour positionner les tringles préfabriquées en anneau (3) et pour enlever une carcasse de pneu terminée du tambour de carcasse (9), au moins ce support annelé (10) et les dispositifs de centrage de tringle (14) peuvent être écartés du tambour de carcasse (9) parallèlement à l'axe (a).
